(19) Europäisches Patentamt
European Patent Office
Office européen des brevets

(11) EP 2 589 633 B1

(12) **EUROPEAN PATENT SPECIFICATION**

(45) Date of publication and mention of the grant of the patent:
**27.06.2018 Bulletin 2018/26**

(21) Application number: **11801156.8**

(22) Date of filing: **30.06.2011**

(51) Int Cl.:
***C09J 7/00*** *(2018.01)* ***C09J 121/02*** *(2006.01)*
***C09J 161/12*** *(2006.01)* ***C08J 5/18*** *(2006.01)*
***B60C 5/14*** *(2006.01)*

(86) International application number:
**PCT/KR2011/004805**

(87) International publication number:
**WO 2012/002750 (05.01.2012 Gazette 2012/01)**

(54) **FILM FOR TIRE INNER LINER, AND PREPARATION METHOD THEREOF**

FILM FÜR EINE REIFENINNENSCHICHT UND HERSTELLUNGSVERFAHREN DAFÜR

FILM POUR CALANDRAGE INTÉRIEUR DE PNEU ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2010 KR 20100063024**
**30.06.2010 KR 20100063025**

(43) Date of publication of application:
**08.05.2013 Bulletin 2013/19**

(73) Proprietor: **Kolon Industries, Inc.**
**Gwacheon-si, Gyeonggi-do 13837 (KR)**

(72) Inventors:
- **JEON, Ok-Hwa**
  **Gyeongsan-si**
  **Gyeongsangbuk-do 712-903 (KR)**
- **KIM, Gi-Woong**
  **706-010 Daegu (KR)**
- **CHUNG, Il**
  **Daegu-Si 706-020 (KR)**

(74) Representative: **Ter Meer Steinmeister & Partner**
**Patentanwälte mbB**
**Nymphenburger Straße 4**
**80335 München (DE)**

(56) References cited:
**JP-A- H09 165 469**
**JP-A- 2009 132 379**
**KR-A- 20040 085 643**
**KR-A- 20050 122 461**
**US-A1- 2006 174 997**

EP 2 589 633 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to a film for a tire inner liner, and more particularly to a film for a tire inner liner that may exhibit an excellent gas barrier property with a thin thickness, and thus enable light weight of a tire and improvement in automobile mileage, may be strongly bonded to a tire carcass layer, and may exhibit excellent formability and fatigue resistance, and the like, and a method for manufacturing the same.

## BACKGROUND OF THE ART

A tire withstands the weight of an automobile, reduces impact from the road, and transfers driving force or braking force of an automobile to the ground. In general, a tire is a complex of fiber/steel/rubber, and has a structure as shown in Fig. 1.

Tread (1): a part contacting the road. It should afford frictional force required for driving, have good wear resistance, withstand external impact, and produce a low amount of heat.

Body Ply, or Carcass (6): a cord layer in the tire. It should support the weight, withstand impact, and have high fatigue resistance to bending and stretching exercises during running.

Belt (5): it is located between the body plies, consists of steel wire in most cases, reduces external impact, and maintains a wide tread to afford excellent vehicle running stability.

Side Wall (3): a rubber layer between a part below a shoulder (2) and bead (9). It protects the inner body ply (6).

Inner Liner (7): it is located inside the tire instead of a tube, and prevents air leakage to enable a pneumatic tire.

BEAD (9): square or hexagonal wire bundle formed of rubber-coated steel wire. It positions and fixes the tire to a rim.

CAP PLY (4): a special cord located on a belt of a radial tire for some cars. It minimizes movement of the belt during running.

APEX (8): triangle rubber filler used to minimize dispersion of the bead, reduce external impact to protect the bead, and prevent air inflow during forming.

Recently, a tubeless tire where high pressure air of 30 to 40 psi is injected has been commonly used without a tube, and to prevent air leakage during automobile running, an inner liner having a high gas barrier property is positioned as the inner layer of the carcass.

Previously, a tire inner liner including rubber such as butyl rubber or halobutyl rubber and the like having relatively low air permeability as a main ingredient was used, but to achieve a sufficient gas barrier property of the inner liner, the rubber content or inner liner thickness should be increased. Thus, the total weight of the tire was increased, automobile mileage was degraded, air pockets were generated between the inner rubber of the carcass layer and the inner liner during vulcanization of a tire or during automobile running, or the shape or property of the inner liner was varied.

Therefore, various methods have been suggested to decrease the thickness and weight of the inner liner to reduce mileage, and reduce changes in the shape or property of the inner liner during vulcanization of a tire or while running, and the like.

However, previously known methods have limitations in maintaining excellent air permeability and formability of a tire while sufficiently decreasing the thickness and weight of the inner liner, and has problems in that additional tie gum rubber and the like is used for strong bonding to a carcass layer inside the tire, which increases the weight of a tire and degrades automobile mileage. Further, the inner liner manufactured by the previously known method did not have sufficient fatigue resistance, and for example generated cracks due to repeated deformations during a tire manufacturing process or while running and the like.

Accordingly, there is a demand for studies on a film for a tire inner liner that may achieve light weight of a tire with a thinner thickness, exhibit excellent properties including gas barrier property, formability, and the like, and withstand repeated deformations.

## DETAILED DESCRIPTION OF THE INVENTION

## TECHNICAL OBJECTIVES

It is an object of the present invention to provide a film for a tire inner liner that may exhibit an excellent gas barrier property with a thin thickness, and thus enables light weight of a tire and improvement in automobile mileage, may be strongly bonded to a tire carcass layer, and may exhibit excellent formability and fatigue resistance.

It is another object of the present invention to provide a method for manufacturing the film for a tire inner liner.

## TECHNICAL SOLUTIONS

The present invention provides a film for a tire inner liner including a base film layer with a thickness of 30 to 300 $\mu$m, including: a copolymer or mixture of 50 to 95 wt% of a polyamide-based resin and 5 to 50 wt% of a polyether-based resin; and an adhesive layer including an adhesive containing 2 to 32 wt% of a condensate of resorcinol and formaldehyde and 68 to 98 wt% of latex.

The present invention also provides a method for manufacturing a film for a tire inner liner including: forming a copolymer or a mixture of 50 to 95 wt% of a polyamide-based resin and 5 to 50 wt% of a polyether-based resin; melting and extruding the copolymer or mixture to form a base film with a thickness of 30 to 300 $\mu$m; and forming an adhesive layer including 2 to 32 wt% of a condensate of resorcinol and formaldehyde and 68 to 98 wt% of latex on at least one side of the base film layer.

Hereinafter, a tire inner liner film and a manufacturing method thereof according to specific embodiments of the invention will be explained in detail.

According to one embodiment of the invention, there is provided a film for a tire inner liner including: a base film layer with a thickness of 30 to 300 $\mu$m, including a copolymer or mixture of 50 to 95 wt% of a polyamide-based resin and 5 to 50 wt% of a polyether-based resin; and an adhesive layer including adhesive containing 2 to 32 wt% of a condensate of resorcinol and formaldehyde and 68 to 98 wt% of latex.

As results of studies, the inventors confirmed that if a base film layer prepared by copolymerizing or mixing a polyamide-based resin and a polyether-based resin in a specific content ratio is used, an excellent gas barrier property and high internal pressure retention may be achieved with a thin thickness, the base film may exhibit high reactivity to a specific adhesive so that it may be strongly and uniformly bonded inside of a tire with a thin and light-weight adhesive layer, and when a tire is molded, it may be easily elongated and deformed with a small force, thus exhibiting excellent formability and improved fatigue resistance.

Furthermore, the base film may have high reactivity with resorcinol-formalin-latex (RFL)-based adhesive having the above specific composition due to the characteristic chemical structure, and the resorcinol-formalin-latex (RFL)-based adhesive having the above specific composition may exhibit high and uniform adhesion to a tire carcass layer. Thereby, the tire inner liner film may be strongly and uniformly bonded to a tire carcass layer, and large degradation of bonding force between the inner liner film and tire carcass layer or breakage between the base film and adhesive layer may be prevented in a tire manufacturing process during which high temperature deformation or elongation is applied, or in an automobile running process during which repeated physical deformations are applied for a long time.

Further, an adhesive layer formed using a resorcinol-formalin-latex (RFL)-based adhesive having the above specific composition may not exhibit large degradation of elasticity or modulus property even after it is formed on the base film or fixed on a tire carcass layer, and it may be uniformly elongated or deformed with a small force in a tire molding process. Thereby, when the adhesive layer is applied, formability of a green tire or final tire may be improved without degradation of properties of an inner liner film, and bonding between the base film and adhesive layer and between the adhesive layer and tire carcass layer may be strongly maintained.

Also, since the tire inner liner film does not largely require additional additives or rubber ingredients for property improvement, a manufacturing process may be simplified, and tire manufacturing cost may be reduced. Thus, the tire inner liner film may enable light weight of a tire to improve mileage of automobiles, it may maintain optimum internal pressure even after being used for a long time, thus preventing lowering of mileage and overturning accidents induced by low internal pressure, it may secure durability due to excellent resistance to repeated fatigue during running, and it may allow manufacture a tire with excellent performances by a simple process.

The "copolymer of a polyamide-based resin and a polyether-based resin" refers to a block copolymer of a polyamide-based resin consisting of polyamide-based repeat units and a polyether-based resin consisting of polyether-based repeat units, and it may also include a random copolymer wherein polyamide-based repeat units and polyether-based repeat units are bonded in a random repeat number and sequence. For example, the random copolymer may be obtained by copolymerizing monomers or precursors of the polyamide-based resin and monomers or precursors of the polyether-based resin, for example, monomers or oligomers.

Meanwhile, a maximum load deviation factor between the tire inner liner film and the base film may be 3 % to 30 %, preferably 5 % to 35 %, more preferably 10 % to 30 %, at 100 % elongation at room temperature. The maximum load deviation factor of the tire inner liner film and base film at 100 % elongation at room temperature may be represented by the following General Formula 1.

[General Formula 1]

$$\triangle M = \{(M_{ab} - M_b)/ M_b\} * 100$$

In General Formula 1, $M_{ab}$ denotes maximum load exhibited when a tire inner liner film is 100 % elongated at room temperature, and $M_b$ denotes maximum load exhibited when a base film is 100 % elongated at room temperature.

The difference between the maximum load of the tire inner liner film including a base film and an adhesive layer at 100 % elongation and the maximum load of the base film at 100 % elongation may directly or indirectly mean maximum load of the adhesive layer at 100 % elongation. Thus, through the deviation factor ($\Delta$M) of General Formula 1 based on "the difference between the maximum load ($M_{ab}$) of the tire inner liner film at 100 % elongation at room temperature and the maximum load ($M_b$) of the base film at 100 % elongation at room temperature" after adhesive treatment, a property relating to "the maximum load of the adhesive layer at 100 % elongation at room temperature" may be derived.

In General Formula 1, the "maximum load ($M_{ab}$) of the tire inner liner film at 100 % elongation at room temperature" means a maximum (Max) load value exhibited when a tire inner liner film obtained by coating an adhesive on one side or both sides of the base film and solidifying it under specific heat treatment conditions is 100 % elongated at room temperature. The "specific heat treatment" is one example of steps that can be applied after treating a base film with an adhesive, it may be a step for bonding the adhesive layer with the base film or drying or solidifying the coated adhesive to form an adhesive layer, and it may be conducted at 100 to 200 °C for 10 seconds to 10 minutes, more specifically at 150 °C for 1 minute.

In the tire inner liner film, the maximum load deviation factor ($\Delta$M) (hereinafter referred to as "deviation factor ($\Delta$M) of General Formula 1" of the tire inner liner film and the base film is 3 % to 30 % at 100 % elongation at room temperature, and thus, both the base film and adhesive film layers may be uniformly stretched and deformed with a small force in a tire molding process, thereby improving formability of a green tire or final tire without property deterioration of the inner liner film, and strongly maintaining bonding between the base film and adhesive layer and between the adhesive layer and carcass layer.

Meanwhile, the adhesive used in the tire inner liner film exhibits adhesive strength and the maximum load at 100 % elongation may be increased by a cross-linking reaction, and thus the deviation factor ($\Delta$M) of the General Formula 1 should be above a certain level, for example, 3 % or more, so as to secure sufficient adhesion. If the deviation factor ($\Delta$M) of General Formula 1 is 3 % or more, the adhesive layer may exhibit a high cross-linking degree when it is bonded to a base film or carcass layer, thus exhibiting excellent adhesion, and thereby the tire inner liner film may be strongly bonded to a carcass layer.

Also, since the modulus of the tire inner liner film is not largely changed even after conducting a process of forming an adhesive layer on a base film, for example, coating adhesive and solidifying under heat treatment conditions of 150 °C for 1 minute, excellent formability and durability may be afforded to a tire. Thus, the deviation factor ($\Delta$M) of General Formula 1 should be below a certain level, for example, 40 % or less, so that the film may be stretched or deformed according to the shape of a tire with small force, and crystallization, cracks, or curing, and the like due to thermal or mechanical deformation generated in a tire manufacturing or automobile running process may be effectively prevented.

Meanwhile, a maximum load exhibited when the tire inner liner film is 100 % elongated may be 1.0 to 4.0 Kgf, preferably 1.3 to 3.5 Kgf. Since a maximum load of the above range is generated when the tire inner liner film is 100 % elongated at room temperature, it may be stretched or deformed according to the shape of a tire with a small force, and crystallization, cracks, or curing, and the like due to thermal or mechanical deformation generated in a tire manufacturing or automobile running process may be effectively prevented. As explained above, the tire inner liner film may be obtained by coating an adhesive on one side or both sides of the base film and solidifying it under specific heat treatment conditions.

Meanwhile, the properties of the tire inner liner film partly result from application of a base film obtained by copolymerizing or mixing a polyamide-based resin and a polyether-based resin affording an elastomeric property in a specific content ratio.

In the base film, a part derived from the polyamide-based resin, due to the molecular chain property, exhibits an excellent gas barrier property, for example, a 10 to 20 times higher gas barrier property compared to butyl rubber, and the like that are commonly used in a tire with the same thickness, and it exhibits a low modulus compared to other resins. Also, due to a part derived from the polyether-based resin, the modulus property of the total base film may be lowered, thus exhibiting excellent formability in a tire manufacturing process, and preventing an increase in stiffness of the film layer or deterioration of mechanical properties under high temperature and high pressure conditions.

In general, a polyamide-based resin is known to be easily crystallized by heat. However, since the tire inner liner film includes a specific content of the polyether-based resin, it may inhibit growth of crystals by heat in the film or external deformation. Thus, the inner liner film may not be easily crystallized by heat generated inside of a tire, the modulus or stiffness may not largely change even when running for a long time, and cracks generated during running may be minimized.

Meanwhile, the base film may have a thickness of 30 to 300 $\mu$m, preferably 40 to 250 $\mu$m, and more preferably 40 to 200$\mu$m. Thus, the tire inner liner film according to one embodiment of the invention may have low air permeability, for example, oxygen permeability of 200 cc/($m^2$ · 24hr · atm) or less, while having a thin thickness compared to those previously known.

Also, as shown in Fig. 2, the base film may exhibit an excellent gas barrier property with a thin thickness compared to previous inner liner films. Specifically, the base film may exhibit a high gas barrier property with the same thickness, compared to a conventional inner liner using halobutyl rubber, and it may exhibit a much superior gas barrier property to an inner liner using natural rubber. Further, although a common nylon 6 stretched film may exhibit a high gas barrier property, the properties may be degraded or it may be deformed during a tire manufacturing or automobile running process, while the tire inner liner film including the base film may exhibit an excellent gas barrier property with slight change in properties or shape, and it may improve formability of a tire. In Fig. 2, the horizontal axis denotes the thickness of a film in a Log scale, the vertical axis denotes oxygen transmission rate (ORT), NR denotes natural rubber, nylon film denotes a common nylon 6 stretched film, Innerliner Rubber #1 and #2 denote a tire inner liner using halobutyl rubber, and Innerliner Film denotes the tire inner liner film according to one example of the invention.

The base film may include a copolymer of 50 to 95 wt% of a polyamide-based resin and 5 to 50 wt% of a polyether-based resin, a mixture of 50 to 95 wt% of a polyamide-based resin and 5 to 50 wt% of a polyether-based resin, or both.

If the polyamide-based resin is used, an excellent gas barrier property may be exhibited. Thus, it allows the base film to have a low oxygen transmission rate while having a thin thickness. Also, since a part derived from the polyamide-based resin exhibits a relatively low modulus compared to other resins, even if mixed or copolymerized with a relatively low content of polyester-based resin, a film for a tire inner liner exhibiting a low modulus of a specific range may be obtained by a method described below, thereby improving formability of a tire.

Further, since a part derived from the polyamide-based resin has sufficient heat resistance and chemical stability, deformation or modification of an inner liner film may be prevented when exposed to high temperature conditions applied in a tire manufacturing process or chemicals such as additives, and the like. Further, since a part derived from the polyamide-based resin may have relatively high reactivity to a specific adhesive, for example, a resorcinol-formalin-latex (RFL)-based adhesive, the inner liner film may be easily attached to a carcass layer, and a break of the interface due to heat or repeated deformations generated in a tire manufacturing or running process may be prevented, and thus the inner liner film may have sufficient fatigue resistance.

As the ingredient of the copolymer or mixture, the polyamide-based resin may be included in a content of 50 to 95 wt%, preferably 70 to 90 wt%. If the content of the polyamide-based resin is less than 50 wt%, the density or gas barrier property of the base film may be lowered. If the content of the polyamide-based resin is greater than 95 wt%, the modulus of the base film may become excessively high or formability of a tire may be lowered, the polyamide-based resin may be crystallized under a high temperature environment in a tire manufacturing process or automobile running process, and cracks may be generated by repeated deformations.

The polyamide-based resin that can be used in the base film may include a polyamide-based resin, for example, nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, and a nylon 66/PPS copolymer; or an N-alkoxyalkylate thereof, for example, methoxy methylate of 6-nylon, methoxy methylate of 6-610-nylon, or methoxy methylate of 612-nylon; and nylon 6, nylon 66, nylon 46, nylon 11, nylon 12, nylon 610, or nylon 612 may be preferably used.

Meanwhile, in the process of forming a copolymer or mixture of the polyamide-based resin and polyether-based resin, a precursor of the polyamide-based resin may be used. As the precursor of the polyamide-based resin, monomers or oligomers known to be used for synthesis of the above-explained polyamide-based resin may be used. For example, if the polyamide-based resin is nylon 6, ε-caprolactam may be used as the precursor.

The polyamide-based resin may have relative viscosity of 2.5 to 4.0. If the relative viscosity if less than 2.5, sufficient elongation may not be achieved due to lowering of toughness, thus generating damage in a tire manufacturing process or automobile running, and if it is greater than 4.0, the modulus or viscosity may become excessively high, thus degrading manufacturing process efficiency and economic efficiency.

Meanwhile, a part derived from the polyether-based resin may be bonded or dispersed between the polyamide-based resins, and it may prevent growth of large crystals in the base film in a tire manufacturing process or automobile running process, or prevent easy breakage of the base film. In addition, a part derived from the polyether-based resin may further lower the modulus of the tire inner liner film so that the film may be stretched or deformed according to the shape of a tire with a small force in a tire molding process, thus allowing easy molding of a tire. A part derived from the polyether-based resin may inhibit an increase in stiffness of a film at a low temperature, prevent crystallization at a high temperature or damage or tearing of an inner liner film due to repeated deformations, and the like, and improve recovering force to deformation of an inner liner to inhibit wrinkle generation of the film due to permanent deformation, thus improving durability of a tire or inner liner.

As the ingredient of the copolymer mixture, the polyether-based resin may be included in the content of 5 to 50 wt%, preferably 10 to 30 wt%. If the content of the polyether-based resin is less than 5 wt%, the modulus of the base film or tire inner liner film may be increased, and thus, formability of a tire may be lowered, or property degradation may largely occur due to repeated deformations. If the content of the polyether-based resin is greater than 50 wt%, the gas barrier property of the tire inner liner may be lowered, reactivity to the adhesive may be lowered thus making it difficult

to easily attach the inner liner to a carcass layer, and elasticity of the base film may be increased thus making it difficult to manufacture a uniform film.

As the polyether-based resin that can be used in the base film, polyethylene glycol, polypropylene glycol, polytetramethylene glycol, polyoxyethylene diamine, polyoxypropylene diamine, polyoxytetramethylene diamine, or a copolymer thereof may be used alone or in combination. The polyether-based resin may have weight average molecular weight of 500 to 10,000, preferably 1000 to 3000. If the weight average molecular weight is less than 500, the polyether-based resin may not inhibit growth of large crystals in the tire inner liner film or it may not lower the modulus. If the weight average molecular weight is greater than 10,000, the gas barrier property of the inner liner may be lowered.

Also, in the process of forming a copolymer or mixture of the polyamide-based resin or polyether-based resin, a precursor of the polyether-based resin may be used. The precursor of the polyether-based resin may include monomers or oligomers known to be used for synthesis of the above explained polyether-based resin. For example, if the polyether-based resin is polyethylene glycol, ethylene glycol or an oligomer of ethylene glycol may be used as the precursor, and if the polyether-based resin is polyoxyethylene diamine, ethylene glycol, ethylene glycol diamine, or an oligomer of ethylene glycol diamine may be used as the precursor.

Meanwhile, the base film may include 1.3 to 2.5 Equ/E6g, preferably 1.5 to 2.4 Equ/E6g of amine groups on the surface. Thereby, the base film may have high reactivity to an adhesive known to be used in a polymer resin film, and it may be strongly and uniformly bonded inside a tire or to a carcass lays with a thin and light-weight adhesive layer. Particularly, to attach the base film to a carcass layer more uniformly and stably, a resorcinol-formalin-latex (RFL)-based adhesive of the above specific composition may be preferably used.

The amine group on the surface of the base film may be derived from the polyamide-based resin or a precursor thereof, or the polyether-based resin or a precursor thereof, or it may be mainly derived from the polyether-based resin or a precursor thereof. The amine group may react with a reaction site or functional group, and the like included in the adhesive layer or adhesive, for example, a condensate of resorcinol and formaldehyde or latex, and the like, to afford excellent adhesion.

To control the number of amine groups on the surface of the base film in the above range, each amount of a polyamide-based resin or a precursor thereof and a polyether-based resin or a precursor thereof used in the manufacturing of the base film may be controlled, the amount or number of amine groups introduced into the polyether-based resin or a precursor thereof may be controlled, or the reaction degree of polymerization may be controlled in the manufacturing process of the base film.

If the number (or amount) of the amine groups on the surface of the base film is less than 1.3 Equ/E6g, chemical bonding force to a specific adhesive layer or adhesive may be low and sufficient adhesion may not be achieved, and thus a thick adhesive layer should be used, or separation between a base film and an adhesive layer may be generated in an automobile running process during which mechanical deformation is applied for a long time or in a manufacturing process during which high temperature deformation/stretching is applied. Further, if the number (or amount) of the amine groups on the surface of the base film is greater than 2.5 Equ/E6g, the molecular chain of the polymer included in the base film becomes short to deteriorate physical or mechanical properties, and due to lowered elongation of the base film, formability or fatigue resistance may not be sufficient when applied for a tire inner liner.

The number (or amount) of the amine groups on the surface of the base film may be calculated by dissolving 0.5 g of the base film in 25 mL of a solution including a ratio of 1:3 of ethanol:phenol at 25 °C and titrating with a 0.02 N hydrochloric acid (HCl) solution.

Meanwhile, the base film may have surface tension of 28 to 38 dyne/cm, preferably 30 to 36 dyne/cm, as measured by ASTM D2578. Since the base film has the above surface tension, the adhesive layer may be strongly and uniformly bonded to the base film. If the surface tension of the base film is less than 28 dyne/cm, a surface tension difference between the base film and the adhesive layer may become large, and thus the adhesive layer may be non-uniformly bonded to the base film, or bonding force between the base film and the adhesive layer may be lowered. If the surface tension of the base film is greater than 38 dyne/cm, a surface tension difference between the base film and the adhesive layer may become large, and thus the adhesive layer may be non-uniformly bonded to the base film, the adhesive may not uniformly spread over the base film and may be partly agglomerated on the base film, and the agglomerated adhesive may induce pollution in a manufacturing process or lower bonding between the base film and the adhesive layer. The surface tension of the base film may be a reagent index of ACCU DYNE Test reagent (Diversified Enterprises Co., PEN TYPE reagent) applied on the film when there is no shape change.

As explained, the tire inner liner film may exhibit improved adhesion to an adhesive or adhesive layer due to the above explained properties of the base film, and it may be strongly and uniformly bonded to a carcass layer with a light-weight adhesive layer without a need to laminate an additional adhesive layer or rubber layer.

Meanwhile, the base film layer may be an unstretched film. If the base film layer is an unstretched film, it may have a low modulus and high strain, and thus it may be appropriately applied in a tire molding process during which high expansion is generated. Also, since crystallization hardly occurs in the unstretched film, damage such as cracks and the like may be prevented even if deformations repeatedly occur. Further, since the unstretched film does not have

a large property difference and orientation in a specific direction, an inner liner having uniform properties may be obtained.

As described in the following manufacturing method of a film for a tire inner liner, the base film may be manufactured in the form of an unstretched or non-oriented film by maximally preventing the orientation of the base film layer, for example, by viscosity control through optimization of melt-extrusion temperature, modification of die standard, or control of winding speed, and the like.

If an unstretched film is applied for the base film layer, a film for an inner liner may be easily manufactured in a cylindrical or sheet type in a tire manufacturing process. Particularly, in case an unstretched sheet-type film is applied for the base film layer, film manufacturing facilities need not to be separately constructed according to tire size, and impact and wrinkles may be minimized during transfer and storage. Also, in case the base film is manufactured in a sheet type, a process of adding an adhesive layer may be more easily conducted, and damage or deformation, and the like generated during a manufacturing process due to a standard difference from a molding drum may be prevented.

Meanwhile, the base film may further include additives such as a heat resistant oxidant, a heat stabilizer, an adhesion improving agent, or a mixture thereof. Specific examples of the heat resistant oxidant may include N,N'-hexamethylene-bis-(3,5-di-tert-butyl-4-hydroxy-hydrocinnamamide, for example, a commercialized product such as Irganox 1098), tetrakis[methylene(3,5-di-t-butyl-4-hydroxyhydrocinnamate)]methane, for example, a commercialized product such as Irganox 1010), or 4,4'-di-cumyl-di-phenyl-amine, for example, Naugard 445), and the like. Specific examples of the heat stabilizer may include bezoic acid, triacetonediamine, or N,N'-bis(2,2,6,6-tetramethyl-4-piperidyl)-1,3-benzenedicarboxamide, and the like. However, the additives are not limited thereto, and those known to be usable for a tire inner liner film may be used without specific limitations.

The above-explained properties of the adhesive layer result from inclusion of a specific resorcinol-formalin-latex (RFL)-based adhesive with a specific composition. As the conventional adhesive for a tire inner liner, a rubber-type tie gum and the like was used. To the contrary, since the adhesive layer includes the resorcinol-formalin-latex (RFL)-based adhesive with a specific composition, it has high reactivity and adhesion to the base film, and the base film and a tire carcass layer may be stably bonded by pressing under a high temperature heating condition without largely increasing the thickness. Thereby, light weight of a tire and improvement in automobile mileage are enabled, and separation between a carcass layer and an inner liner layer or between the base film and the adhesive layer may be prevented even if deformations repeatedly occur during a tire manufacturing process or automobile running. Also, since the adhesive layer may exhibit high fatigue resistance to physical/chemical deformations that may be applied during a tire manufacturing process or automobile running, deterioration of adhesion or other properties may be minimized in a high temperature manufacturing process or automobile running process during which mechanical deformations occur for a long period.

Furthermore, the resorcinol-formalin-latex (RFL)-based adhesive enables cross-linking between latex and rubber to exhibit adhesion performance, has a low curing degree because it is physically a latex polymerization product, and thus is flexible like rubber, and enables chemical bonding between the methylol end group of resorcinol-formalin polymerization product and the base film. Thus, if the resorcinol-formalin-latex (RFL)-based adhesive is applied to the base film, sufficient adhesion may be achieved, and the deviation factor ($\Delta M$) of General Formula 1 may be maintained in the optimum range, for example 3 % to 30 %, to improve formability of a green tire or final tire.

The resorcinol-formalin-latex (RFL)-based adhesive may include 2 to 32 wt%, preferably 10 to 20 wt% of a condensate of resorcinol and formaldehyde, and 68 to 98 wt%, preferably 80 to 90 wt% of latex.

The condensate of resorcinol and formaldehyde may be obtained by mixing resorcinol and formaldehyde in the mole ratio of 1:0.3 to 1:3.0, preferably 1:0.5 to 1:2.5, and conducting condensation. Also, the condensate of resorcinol and formaldehyde may be included in the content of 2 wt% or more based on total weight of the adhesive layer, in terms of a chemical reaction for excellent adhesion, and it may be included in the content of 32 wt% or less to secure optimum fatigue resistance.

The latex may be selected from the group consisting of natural rubber latex, styrene/butadiene rubber latex, acrylonitrile/butadiene rubber latex, chloroprene rubber latex, and styrene/butadienelvinylpyridine rubber latex, and a mixture thereof. The latex may be included in the content of 68 wt% or more based on total weight of the adhesive layer for flexibility and effective cross-linking reaction with rubber, and it may be included in the content of 98 wt% or less for a chemical reaction with the base film and stiffness of the adhesive layer.

Also, the adhesive layer may further include at least one additive such as a surface tension control agent, an antifoaming agent, filler, and the like. Although the surface tension control agent is applied for uniform coating of the adhesive layer, it may cause a decrease in adhesion when introduced in an excessive amount, and thus it may be included in the content of 2 wt% or less, or 0.0001 to 2 wt%, preferably 1.0 wt% or less, or 0.0001 to 0.5 wt%, based on total weight of the adhesive layer. The surface tension control agent may be selected from the group consisting of a sulfonic acid salt anionic surfactant, a sulfate ester surfactant, a carboxylic acid salt anionic surfactant, a phosphate ester anionic surfactant, a fluorine-containing surfactant, a silicone-based surfactant, a polysiloxane-based surfactant, and a combination thereof.

The adhesive layer may have a thickness of 0.1 to 20 $\mu$m, preferably 0.1 to 10$\mu$m, more preferably 0.2 to 7

$\mu$m, still more preferably 0.3 to 5 $\mu$m, and it may be formed on one side or both sides of the film for a tire inner liner. If the thickness of the adhesive layer is too thin, the adhesive layer itself may become thinner during tire expansion, cross-linking adhesion between the carcass layer and base film may be lowered, and stress may be concentrated on a part of the adhesive layer to lower the fatigue property. If the thickness of the adhesive layer is too thick, the interface may be separated to lower the fatigue property. To adhere the inner liner film to a carcass layer of a tire, an adhesive layer is generally formed on one side of the base film, but in case a multi-layered inner liner film is applied, or adhesion to rubber on both sides is required according to a tire molding method and construction design, for example when an inner liner film covers a bead part, the adhesive layer may be preferably formed on both sides of the base film.

Meanwhile, the film for a tire inner liner may have adhesion of 15 to 40 kgf to a tire carcass layer. The adhesion may be measured by ASTM D 4394. The standard deviation of adhesion of the tire inner liner film to a tire carcass layer may be 5 or less, preferably 3 or less. Thus, the film for a tire inner liner may be very uniformly and strongly bonded to a tire carcass layer.

The tire carcass layer (or body ply) is a frame of a tire that supports the load of a car body, and means a structure including tire cord inside a certain rubber ingredient, and in general, a rubber ingredient of the tire carcass layer bonds to a tire inner liner. The rubber ingredient used in the carcass layer is not specifically limited as long as it is a commonly known material, and for example, it may include 30 wt% or more of synthetic rubber or natural rubber, various additives, and the like. As the tire cord included in the carcass layer, various natural fiber or rayon·nylon·polyester and Kevlar, and the like may be used, and steel cord formed by twisting steel wire may also be used.

Meanwhile, the film for a tire inner liner may have adhesion to a tire carcass layer of 10 to 40 kgf, as measured after a dynamic fatigue test according to ASTM D 430. The adhesive layer may be strongly bonded to the base film layer through reaction and bonding, and it may be strongly bonded to a tire carcass layer, wherein the adhesive layer has excellent resistance to repeated shear force at a high temperature and deterioration of the mechanical properties is insignificant because it includes the resorcinol-formalin-latex (RFL)-based adhesive. Thus, the film for a tire inner liner including the base film and an adhesive layer may have an excellent dynamic fatigue property, and breakage of the interface of the adhesive layer or breakage of the inner liner film due to shear force that may be generated between tire layers during automobile running or the tire manufacturing process may be minimized or prevented.

The film for a tire inner liner may have lower air permeability, for example, an oxygen transmission rate of 200 cc/($m^2$· 24hr · atm) or less, preferably 180 cc/($m^2$ · 24hr · atm) or less, or 0 to 180 cc/($m^2$ · 24hr · atm), while having a thin thickness compared to the previously known inner liner film.

Further, the film for a tire inner liner may maintain optimum internal pressure even after use for a long period. For example, when 90 days-IPR (Internal Pressure Retention) of a tire using the tire inner liner film is measured under a 21 and 101.3 kPa condition according to ASTM F 1112-06, internal pressure retention as shown in the following Equation 2 may become 95 % or more, preferably 96.5 % or more, that is, an internal pressure decrease may be 5 % or less, preferably 3.5 % or less. Thus, if the film for a tire inner liner is used, degradation of mileage and overturning accidents caused by low internal pressure may be prevented.

[General Formula 2]

$$\text{Internal pressure retention (\%)} = \left\{ 1 - \frac{\text{Internal pressure of the tire at first evaluation} - \text{Internal pressure of the tire after standing for 90 days}}{\text{Internal pressure of the tire at first evaluation}} \right\} * 100$$

Meanwhile, the base film may consist essentially of a copolymer including a polyamide-based segment; and 5 to 50 wt% of a polyether-based segment, based on total weight of the film.

Thereby, the inner liner film may be distinguished from the previous tire inner liner film including rubber or thermoplastic resin as a main ingredient of the base, and it does not require an additional vulcanizer. The base of the film refers to a substrate of resin or rubber maintaining the shape of a film, excluding additional ingredients such as additives in the tire inner liner film, and the base of the film often included various rubber or resins previously. Although the tire inner liner film according to one embodiment of the invention may include the polyamide-based resin and the like together with the copolymer as a base, it may consist essentially of the copolymer, and in this case, it may not substantially include other resin or rubber ingredients.

The polyamide-based segment may be a main repeat unit included in the above explained polyamide-based

resin. Specifically, the polyamide-based segment may include a repeat unit of the following Chemical Formula 1 or Chemical Formula 2.

[Chemical Formula 1]

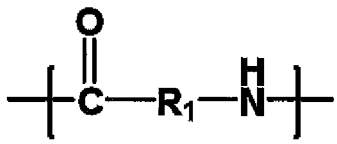

In Chemical Formula 1, $R_1$ may be a C1-20 linear or branched alkylene group or a C7-20 linear or branched arylalkylene group.

[Chemical Formula 2]

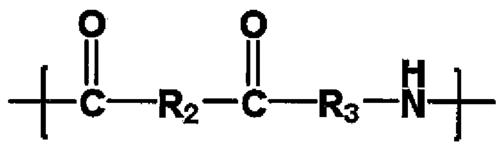

In Chemical Formula 2, $R_2$ may be a C1-20 linear or branched alkylene group, and $R_3$ may be a C1-20 linear or branched alkylene group or a C7-20 linear or branched arylalkylene group.

As used herein, the term "alkylene group" refers to a divalent functional group derived from an alkyl group, and the term "aryl alkylene group" refers to a divalent functional group derived from an aryl-introduced alkyl group.

The polyether-based segment may be a main repeat unit included in the above explained polyether-based resin. The polyether-based segment refers to a repeat unit including an alkyl oxide (-alkyl-O-) group, and it may be formed from a polyether-based resin participating in a polymerization reaction or a precursor thereof. Specifically, the polyether-based segment may include a repeat unit of the following Chemical Formula 5.

[Chemical Formula5]

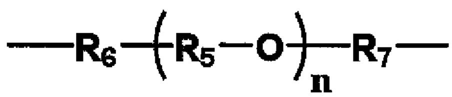

In Chemical Formula 5, $R_5$ may be a C1-10 linear or branched alkylene group, n may be an integer of from 1 to 100, and $R_6$ and $R_7$ may be the same or different, and are independently -O-, -NH-, -COO-, or -CONH-.

The film for a tire inner liner may further include the polyamide-based resin to improve mechanical property or gas barrier property. The polyamide-based resin may exist on the film while being mixed or copolymerized with the copolymer of the polyamide-based segment and the polyether-based segment. As described below, the polyamide-based resin may be mixed with the copolymer of the polyamide-based segment and the polyether-based segment, and then melted and extruded, and thus included in the tire inner liner film.

The polyamide-based resin that can be further included may be used to improve mechanical properties of the tire inner liner film, for example, heat resistance or chemical stability, and the gas barrier property, but if the amount is too large, properties of the manufactured tire inner liner film may be degraded. Specifically, in case the polyamide-based resin is additionally used, the sum of the polyether-based segment in the film should be maintained in the range of 5 to 50 wt%, and thereby the sum of the polyamide-based resin, the polyamide-based segment, and other additives should be 50 to 95 wt%.

The polyamide-based resin that can be additionally used is not specifically limited, and it is preferable to use a polyamide-based resin including a repeat unit that is identical or similar to the polyamide-based segment so as to increase compatibility with the copolymer.

Meanwhile, according to another embodiment of the invention, there is provided a method for manufacturing a film for a tire inner liner including: forming a copolymer or a mixture of 50 to 95 wt% of a polyamide-based resin and

5 to 50 wt% of a polyether-based resin; melting and extruding the copolymer or mixture to form a base film with a thickness of 30 to 300 $\mu$m; and forming an adhesive layer including 2 to 32 wt% of a condensate of resorcinol and formaldehyde and 68 to 98 wt% of latex on at least one side of the base film layer.

According to the manufacturing method, a film for a tire inner liner may be provided that may exhibit excellent a gas barrier property and high internal pressure retention with a thin thickness, may be strongly and uniformly bonded to a tire carcass layer with a light-weight adhesive layer due to high reactivity of the base film to a specific adhesive, may be easily stretched or deformed with a small force in a tire molding process, and thus exhibit excellent formability and fatigue resistance.

Furthermore, the base film may have high reactivity with a resorcinol-formalin-latex (RFL)-based adhesive having the above specific composition due to the characteristic chemical structure, the resorcinol-formalin-latex (RFL)-based adhesive having the above specific composition may exhibit high and uniform adhesion to a tire carcass layer, and lowering of adhesion or interlayer breakage inside a tire may be prevented in a tire manufacturing process during which high temperature deformation or stretching is applied or in an automobile running process during which repeated physical deformations are applied for a long time.

Also, by using the resorcinol-formalin-latex (RFL)-based adhesive having the above specific composition, the elasticity or modulus property may not be largely deteriorated after an adhesive layer is formed on the base film or even after an adhesive layer is fixed to a tire carcass layer, and the tire inner liner film may be uniformly stretched or deformed with a small force in a tire molding process.

As explained above, when the film for a tire inner liner is 100 % elongated at room temperature, the maximum load deviation factor (deviation factor of the General Formula 1) generated between the tire inner liner film and the base film may be 3 % to 30 %, preferably 5 % to 35 %, and more preferably 10% to 30%. The maximum load deviation factor of the tire inner liner film and the base film at 100 % elongation at room temperature may be represented by the General Formula 1.

Also, the maximum load generated when the tire inner liner film is 100 % elongated at room temperature may be 1.0 to 4.0 Kgf, and the details are as explained above.

Further, the tire inner liner film may have adhesion to a tire carcass layer of 15 to 40 kgf, as measured by ASTM D 4393, and it may have adhesion to a tire carcass layer of 10 to 40 kgf, as measured after a dynamic fatigue test according to ASTM D 430. The base film of the tire inner liner film may include 1.3 to 2.5 Equ/E6g of amine groups on the surface, the surface tension of the base film may be 28 to 38 dyne/cm as measured by ASTM D2578, and air permeability of the tire inner liner film may be 200 cc/($m^2$ · 24hr · atm) or less as measured by ASTM D 3895. The details are as explained above.

The step of forming a copolymer or mixture of 50 to 95 wt% of the polyamide-based resin and 5 to 50 wt% of the polyether-based resin may include polymerizing or mixing 50 to 95 wt% of the polyamide-based resin or a precursor thereof and 5 to 50 wt% of the polyether-based resin or a precursor thereof.

In the step of forming the copolymer or mixture, reaction conditions may be modified according to the kind of resin or precursor. For example, in the step of reacting monomers of a polyamide-based resin (for example, ε-caprolactam and the like), acidic conditions and a nitrogen atmosphere may be applied, as in the step of polymerizing the polyamide-based resin or a precursor thereof; and the polyether-based resin may include heating or melting at a temperature of 50 °C or more, and if necessary, raising or reducing pressure.

For mixing of the polyamide-based resin or a precursor thereof and the polyether-based resin and a precursor thereof, various mixing, blending, or compound methods known to be used for mixing of polymer resin may be used without specific limitations.

For polymerization reaction of the polyamide-based resin or a precursor thereof and the polyether-based resin or a precursor thereof, any method and apparatus commonly used for synthesis of polyamide-based resins or polyether-based resins may be used without specific limitations.

The details of the polyamide-based based resin or a precursor thereof and the polyether-based resin or a precursor thereof are as explained above.

The melting temperature of the copolymer or mixture of the polyamide-based based resin or a precursor thereof and the polyether-based resin or a precursor thereof may be 230 to 300 °C, preferably 240 to 280 °C. The melting temperature should be higher than the melting point of a polyamide-based compound, but if it is too high, carbonization or decomposition may occur to deteriorate properties of a film, and bonding between the polyether-based resins may occur or orientation may be generated toward a fiber arrangement direction, and thus it may be unfavorable for manufacturing of an unstretched film.

Meanwhile, the base film of the tire inner liner film may be obtained by manufacturing the product of the melt-extrusion step to an unstretched film with a thickness of 30 to 200 $\mu$m. The thickness of the extrudate may be controlled according to the standard of the apparatus used such as an extruder and the like. To form an unstretched film, the melt extrusion temperature may be optimized to control the viscosity of the molten substance, the discharge amount of the molten substance may be controlled, the standard of die may be modified, or the film winding speed may be controlled.

For example, a lip opening of the die may be set to around 1 mm, and too narrow a lip opening is not preferable because pressure applied to the front end of the die may be excessively increased. Further, it is preferable to maintain an appropriate winding speed of a film so as to prevent faulty cooling and an increase in the orientation degree, and for example, the winding speed may be maximally inhibited to apply a speed of 100 m/min or less, preferably 50 m/min or less.
The method for manufacturing a film for a tire inner liner may further include a step of forming an adhesive layer including a resorcinol-formalin-latex (RFL)-based adhesive on at least one side of the film after forming a base film through melt-extrusion.
The step of forming an adhesive layer may be progressed by coating the resorcinol-formalin-latex (RFL)-based adhesive on one side or both sides of the base film and drying it, and the formed adhesive layer may have a thickness of 0.1 to 20 $\mu$m, preferably 0.1 to 10$\mu$m, more preferably 0.2 to 7 $\mu$m, and still more preferably 0.3 to 5 $\mu$m. The resorcinol-formalin-latex (RFL)-based adhesive may include 2 to 32 wt% of a copolymer of resorcinol and formaldehyde and 68 to 98 wt%, preferably 80 to 90 wt%, of latex.
The details of the resorcinol-formalin-latex (RFL)-based adhesive with a specific composition are as explained above.
A commonly used coating method or apparatus may be used to coat the adhesive without specific limitations, but knife coating, bar coating, gravure coating, spray coating, or immersion may be used. However, knife coating, gravure coating, or bar coating may be preferable for uniform coating of the adhesive.
After forming the adhesive layer on one side or both sides of the base film, drying and adhesive reaction may be simultaneously progressed, but heat treatment may be progressed after drying considering reactivity of the adhesive, and the formation of the adhesive layer and drying and heat treatment may be applied several times for the thickness of the adhesive layer or application of a multi-layered adhesive. After coating the adhesive on the base film, heat treatment may be conducted by solidifying and reacting at 100~150 for approximately 30 seconds to 3 minutes.
In the step of forming the copolymer or mixture, or in the step of melting and extruding the copolymer, additives such as a heat resistant antioxidant or heat stabilizer and the like may be additionally added. The details of the additives are as explained above.

## ADVANTAGEOUS EFFECT OF THE INVENTION

According to the present invention, there is provided a film for a tire inner liner that may exhibit an excellent gas barrier property with a thin thickness, and thus, enables light weight of a tire and improvement in automobile mileage, may be strongly bonded to a tire carcass layer, and may exhibit excellent formability and fatigue resistance and the like.

## BRIEF DESCRIPTION OF THE DRAWINGS

Fig. 1 schematically shows the structure of a tire.
Fig. 2 schematically shows air permeability according to the material and thickness of the inner liner.

## DETAILS FOR PRACTICING THE INVENTION

Hereinafter, preferable examples are presented, but these examples are only to illustrate the invention and the scope of the invention is not limited thereto.
**[0109]** * In the following examples and comparative examples, the thickness of the base film was measured using a gauge tester (MITUTOYO Co.), and the thickness of the adhesive layer is the mean value of the results obtained by measuring the cross-section of the tire inner liner film using an FE-SEM apparatus (JEOL Co.) 5 times.

**<Example: Manufacture of a film for a tire inner liner>**

**1. Example 1**

(1) Manufacture of a base film

60 wt% of a polyamide-based resin (nylon 6) with relative viscosity of 3.4 and 40 wt% of a polyamide-based elastomer resin having a weight average molecular weight of 100,000 (copolymer resin using 50 wt% of each of nylon 6 and polyoxyethylene glycol) were mixed, and the mixture was extruded at 260 °C with a circular die to manufacture an unstretched base film with a thickness of 80 $\mu$m at a speed of 30 m/min without passing stretching and heat treatment sections.

(2) Preparation of adhesive layer composition

Resorcinol and formaldehyde were mixed at a mole ratio of 1:2, and then a condensation reaction was conducted to obtain a condensate of resorcinol and formaldehyde.

12 wt% of the condensate of resorcinol and formaldehyde and 88 wt% of styrene/1,3-butadiene/vinylpyridine latex were mixed to obtain a mixture of resorcinol/formaldehyde-latex with a concentration of 20 %.

(3) Manufacture of a film for a tire inner liner

The resorcinol/formaldehyde-latex (RFL)-based adhesive composition was coated on both sides of the base film (200 mm×300 mm) using a gravure coater. Then, it was dried and heat treated in a hot-air oven of 150 for 60 seconds to manufacture a film for a tire inner liner including adhesive layers at a 1.0 μm thickness on both sides of the base film.

**2. Example 2**

A film for a tire inner liner was manufactured by the same method as Example 1, except using each 50 wt% of the polyamide-based resin and the polyamide-based elastomer resin in the step of manufacturing the base film.

**3. Example 3**

A film for a tire inner liner was manufactured by the same method as Example 1, except that the contents of the condensate of resorcinol and formaldehyde, and styrene/butadiene-1,3/vinylpyridine latex, were respectively changed to 15 wt% and 85 wt% in the adhesive layer composition, and that the adhesive layer was formed to a thickness of 1.4 μm.

**4. Example 4**

A film for a tire inner liner was manufactured by the same method as Example 1, except that the contents of the condensate of resorcinol and formaldehyde, and styrene/butadiene-1,3/vinylpyridine latex were respectively changed to 15 wt% and 85 wt% in the adhesive layer composition, the concentration of the resorcinol/formaldehyde-latex was changed to 25 %, and the adhesive layer was formed to a thickness of 1.6 μm.

**5. Example 5**

A film for a tire inner liner was manufactured by the same method as Example 1, except that the contents of the condensate of resorcinol and formaldehyde, and styrene/butadiene-1,3/vinylpyridine latex, were respectively changed to 15 wt% and 85 wt% in the adhesive layer composition, the concentration of the resorcinol/formaldehyde-latex was changed to 30 %, and the adhesive layer was formed to a thickness of 2.0 μm.

**6. Example 6**

(1) Manufacture of a base film

To a mixture of 70 wt% of ε-caprolactam and 30 wt% of polyoxyethylene diamine (Mw 1000) for polymerization of resin for a base film, adipic acid was added in the same mole number as the polyoxyethylene diamine, and the mixture was melted at 100 for 30 minutes under a nitrogen atmosphere. The molten liquid was heated at 250 for 3 hours, and the pressure was increased to 8 kg/ $cm^2$ and maintained. The pressure was then reduced to 1 $kg/cm^2$ for 1 hour.

The pressure-reduced molten liquid was manufactured into a chip shape, and then the manufactured chips were extruded at 260 with a circular die to obtain an unstretched base film with a thickness of 100 μm at a speed of 30 m/min without passing stretching and heat treatment sections.

(2) Preparation of an adhesive layer composition

Resorcinol and formaldehyde were mixed at a mole ratio of 1:2, and then condensation was conducted to obtain a condensate of resorcinol and formaldehyde.

12 wt% of the condensate of resorcinol and formaldehyde and 88 wt% of styrene/butadiene-1,3/vinylpyridine latex were mixed to obtain a mixture of resorcinol/formaldehyde-latex with a concentration of 20 %.

(3) Manufacture of a film for a tire inner liner

On both sides of the base film (200 mm×300 mm), the resorcinol-formalin-latex (RFL)-based adhesive composition was coated using a gravure coater. Then, it was dried and heat treated in a hot-air oven at 150 for 60 seconds to manufacture a film for a tire inner liner including adhesive layers with a 0.5 μm thickness on both sides of the base film.

**7. Example 7**

A film for a tire inner liner was manufactured by the same method as Example 6, except using a mixture of 60 wt% of ε-caprolactam and 40 wt% of polyoxyethylene diamine (Mw 1000) in the step of manufacturing the base film.

**8. Example 8**

A film for a tire inner liner was manufactured by the same method as Example 6, except that the contents of the condensate of resorcinol and formaldehyde, and styrene/butadiene-1,3/vinylpyridine latex, were respectively changed to 15 wt% and 85 wet% in the adhesive layer composition, and the adhesive layer was formed to a thickness of 0.6 μm.

**9. Example 9**

A film for a tire inner liner was manufactured by the same method as Example 6, except that the contents of the condensate of resorcinol and formaldehyde, and styrene/butadiene-1,3/vinylpyridine latex, were respectively changed to 15 wt% and 85 wt% in the adhesive layer composition, the concentration of the mixture of resorcinol/formaldehyde-latex was changed to 25 %, and the adhesive layer was formed to a thickness of 0.9 μm.

**10. Example 10**

A film for a tire inner liner was manufactured by the same method as Example 6, except that the contents of the condensate of resorcinol and formaldehyde, and styrene/butadiene-1,3/vinylpyridine latex, were respectively changed to 15 wt% and 85 wt% in the adhesive layer composition, the concentration of the mixture of resorcinol/formaldehyde-latex was changed to 30 %, and the adhesive layer was formed to a thickness of 0.9 μm.

**11. Example 11**

A film for a tire inner liner was manufactured by the same method as Example 1, except that the contents of the condensate of resorcinol and formaldehyde, and styrene/butadiene-1,3/vinylpyridine latex, were respectively changed to 13 wt% and 87 wt% in the adhesive layer composition, and the adhesive layer was formed to a thickness of 1.2 μm.

**12. Example 12**

A film for a tire inner liner was manufactured by the same method as Example 1, except that the contents of the condensate of resorcinol and formaldehyde, and styrene/butadiene-1,3/vinylpyridine latex, were respectively changed to 15 wt% and 85 wt% in the adhesive layer composition, the concentration of the mixture of resorcinol/formaldehyde-latex was changed to 25 %, and the adhesive layer was formed to a thickness of 1.4 μm.

**13. Example 13**

A film for a tire inner liner was manufactured by the same method as Example 1, except that the concentration of the resorcinol/formaldehyde-latex was changed to 25 %, and the adhesive layer was formed to a thickness of 1.6 μm.

**14. Example 14**

A film for a tire inner liner was manufactured by the same method as Example 6, except using a mixture of 80 wt% of ε-caprolactam and 20 wt% of polyoxyethylene diamine (Mw 1000) in the step of manufacturing the base film.

**15. Example 15**

A film for a tire inner liner was manufactured by the same method as Example 6, except that the contents of the condensate of resorcinol and formaldehyde, and styrene/butadiene-1,3/vinylpyridine latex, were respectively changed to 15 wt% and 85 wt% in the adhesive layer composition, and the adhesive layer was formed to a thickness of 0.6 $\mu$m.

**16. Example 16**

A film for a tire inner liner was manufactured by the same method as Example 6, except that the contents of the condensate of resorcinol and formaldehyde, and styrene/butadiene-1,3/vinylpyridine latex, were respectively changed to 17 wt% and 83 wt% in the adhesive layer composition, and the adhesive layer was formed to a thickness of 0.7 $\mu$m.

**<Comparative Example: Manufacture of a film for a tire inner liner>**

**1. Comparative Example 1**

A film for a tire inner liner was manufactured by the same method as Example 6, except using each 30 wt% and 70 wt% of ε-caprolactam and polyoxyethylene diamine (Mw 1000) in the step of manufacturing the base film.

**2. Comparative Example 2**

A film for a tire inner liner was manufactured by the same method as Example 1, except that the contents of the condensate of resorcinol and formaldehyde, and styrene/butadiene-1,3/vinylpyridine latex, were respectively changed to 35 wt% and 65 wt% in the adhesive layer composition, the concentration of the mixture of resorcinol/formaldehyde-latex was changed to 30 %, and the adhesive layer was formed to a thickness of 9.0 $\mu$m.

**3. Comparative Example 3**

A film for a tire inner liner was manufactured by the same method as Comparative Example 2, except that the thickness of the adhesive layer was changed to 12 $\mu$m.

**4. Comparative Example 4**

A film for a tire inner liner was manufactured by the same method as Example 6, except that the contents of the condensate of resorcinol and formaldehyde, and styrene/butadiene-1,3/vinylpyridine latex, were respectively changed to 35 wt% and 65 wt% in the adhesive layer composition, the concentration of the mixture of resorcinol/formaldehyde/latex was changed to 30 %, and the adhesive layer was formed to a thickness of 9.0 $\mu$m.

**5. Comparative Example 5**

A film for a tire inner liner was manufactured by the same method as Example 6, except that the contents of the condensate of resorcinol and formaldehyde, and styrene/butadiene-1,3/vinylpyridine latex, were respectively changed to 40 wt% and 60 wt% in the adhesive layer composition, the concentration of the mixture of resorcinol/formaldehyde-latex was changed to 30 %, and the adhesive layer was formed to a thickness of 12.0 $\mu$m.

**6. Comparative Example 6**

A film for a tire inner liner was manufactured by the same method as Example 6, except that the contents of the condensate of resorcinol and formaldehyde, and styrene/butadiene-1,3/vinylpyridine latex, were respectively changed to 1 wt% and 99 wt% in the adhesive layer composition, the concentration of the mixture of resorcinol/formaldehyde-latex was changed to 20,%, and the adhesive layer was formed to a thickness of 0.05,$\mu$m.

**7. Comparative Example 7**

A film for a tire inner liner was manufactured by the same method as Example 6, except that the contents of ε-caprolactam and polyoxyethylene diamine (Mw 1000) were respectively changed to 97 wt% and 3 wt% in the step of

manufacturing the base film, and the adhesive layer was formed to a thickness of 1.0 $\mu$m.

### 8. Comparative Example 8

A film for a tire inner liner was manufactured by the same method as Example 6, except that the contents of ε-caprolactam and polyoxyethylene diamine (Mw 1000) were respectively changed to 20 wt% and 80 wt% in the step of manufacturing the base film, and the adhesive layer was formed to a thickness of 1.2 $\mu$m.

### <Experimental Example: Measurement of properties of a film for a tire inner liner>

### Experimental Example 1. Measurement of the number of amine groups on the surface of the base film

Each 0.5 g of the base films obtained in Examples 1 to 10 and Comparative Example 1 was dissolved in 25 mL of a solution including 3:1 of ethanol:phenol at 25 °C, and then titrated with a 0.02 N hydrochloric acid (HCl) solution, 1mL of 0.1 % bromophenol blue was added, a point where the color turns from blue to yellow was determined as a titration ending point, and the number (or amount) of the amine groups on the surface of the base film was measured. It was indicated by equivalent number of amine end groups per E6g.

### Experimental Example 2. Measurement of surface tension of base film

The surface tension of each base film obtained in Examples 1 to 10 and Comparative Example 1 was measured by ASTM standard D2578. Specifically, a cotton swab was wet with an ACCU DYNE Test reagent (Diversified Enterprises Co., PEN TYPE reagent), a 5 cm horizontal line was drawn on the surface of each base film obtained in the examples and comparative examples, and a change in the shape of the solution was observed for 5 seconds to measure surface tension. If there was no change in the shape of the test reagent on the film, it was judged that the surface tension of the solution was the same as the surface tension of the film.

The results of Experimental Examples 1 and 2 are summarized in the following Table 1.

[Table 1] Measurement results of Experimental Examples 1 and 2

| | Thickness ($\mu$m) | Surface tension (dyne/cm$^2$) | Number of end amine groups on the surface (Equ/E6g) |
|---|---|---|---|
| Example 1 | 80 | 33 | 2.0 |
| Example 2 | 80 | 35 | 1.8 |
| Example 3 | 80 | 33 | 2.0 |
| Example 4 | 80 | 33 | 2.0 |
| Example 5 | 80 | 33 | 2.0 |
| Example 6 | 100 | 32 | 2.1 |
| Example 7 | 100 | 35 | 1.8 |
| Example 8 | 100 | 32 | 2.1 |
| Example 9 | 100 | 32 | 2.1 |
| Example 10 | 100 | 32 | 2.1 |
| Comp. Example 1 | 100 | 38 | 1.1 |

As shown in Table 1, the tire inner liner film of the examples exhibit low surface tension, have good speadability on the surface of the base film, and thus form a uniform adhesive layer to exhibit excellent and uniform adhesion.

Further, since the base film of the examples includes 1.3 Equ/E6g with more amine groups on the surface, it may have high reactivity to a specific adhesive, and it may be strongly and uniformly bonded to a tire carcass layer, and thus it may exhibit excellent adhesion and improved fatigue resistance with minimizing property change in an automobile running process during which repeated physical deformations are applied for a long time.

**Experimental Example 3. Peel-Test of tire inner liner film**

Adhesion of each tire inner liner film obtained in the examples and comparative examples to a tire carcass layer was measured according to ASTM D 4394.

Specifically, a 1.6 mm rubber sheet, cord, the film for a tire inner liner, a 1.6 mm rubber sheet, cord, and a 1.6 mm rubber sheet were sequentially laminated, and then vulcanized at a pressure of 60 kg/cm$^2$ at 150 for 30 minutes. Then, the vulcanized sample was cut to a width of 1 inch.

Herein, the 1.6 mm rubber, sheet, cord, and 1.6 mm rubber sheet, which are laminated after the tire inner liner film, form a carcass layer, and the rubber sheet was manufactured using a rubber composition as described in the following Table 2.

[Table 2] Composition of rubber sheet

| Ingredient | Content (part by weight) |
|---|---|
| Natural rubber | 100 |
| Zinc oxide | 3 |
| Carbon black | 29.8 |
| Stearic acid | 2.0 |
| Pine Tar | 7.0 |
| Mercaptobenzothiazole | 1.25 |
| Sulfur | 3.0 |
| Diphenylguanidine | 0.15 |
| Phenylbetanaphthalamine | 1.0 |
| Total | 147.2 |

The cut sample was peeled at a speed of 300 mm/min at 25 using a universal testing machine (Instron Corp.), adhesion (kgf) of the inner liner film to a carcass layer was measured twice, and the mean value was calculated. Herein, the mean value of load generated at peeling was determined as adhesion.

The standard deviation was calculated according to the following Equation 1.

[Equation 1]

$$\text{Standard deviation} = \sqrt{\frac{\sum_{i=1}^{n}(\chi_i - m)^2}{n-1}}$$

Herein, $\chi_i$ denotes adhesion of a sample, m denotes mean value of adhesion, and n denotes the number of samples.

**Experimental Example 4. Measurement of adhesion after dynamic fatigue test of tire inner liner film**

Bending deformation is repeatedly applied to the tire inner liner films obtained in Examples 1 to 10 and Comparative Example 1 to conduct a dynamic fatigue test for evaluating fatigue resistance of a cord.

Specifically, according to ASTM D 430, a test specimen of the tire inner liner film with a length of 250 mm and width of 25 mm was manufactured, and a dynamic fatigue test was conducted using a dynamic fatigue test apparatus (FT-4110, Ueshima Co.), wherein a 68 kgf load was applied at a fatigue cycle of 200 rpm at 80 °C with a diameter of a friction roller of 25 mm for 8 hours, and then adhesion between the carcass layer and inner liner film was measured. The mean value of the loads generated at peeling in a 40 mm fatigue region by the friction roller was determined as adhesion. The mean value of 3 time measurements was calculated.

The measurement results of Experimental Examples 3 and 4 are summarized in the following Tables 3 and 4.

[Table 3] Results of Experimental Examples 3 and 4

| | Evaluation of adhesion | | Adhesion after dynamic fatigue test (kgf) |
|---|---|---|---|
| | Adhesion (kgf) | Standard deviation | |
| Example 1 | 25.8 | 1.3 | 20.8 |
| Example 2 | 22.4 | 1.9 | 18.9 |
| Example 3 | 28.0 | 2.1 | 26.5 |
| Example 4 | 31.4 | 2.1 | 16.5 |
| Example 5 | 30.8 | 2.5 | 16.3 |
| Example 6 | 24.2 | 1.5 | 22.7 |
| Example 7 | 22.9 | 1.6 | 18.4 |
| Example 8 | 27.0 | 1.8 | 24.7 |
| Example 9 | 35.5 | 2.3 | 19.4 |
| Example 10 | 32.4 | 2.8 | 18.8 |
| Comparative Example 1 | 15.9 | 2.8 | 6.5 |
| Comparative Example 2 | 22.2 | 6.0 | break |
| Comparative Example 3 | 21.8 | 6.5 | Break |
| Comparative Example 4 | 23.5 | 5.5 | Break |
| Comparative Example 5 | 14.5 | 5.2 | Break |
| Comparative Example 6 | 8.6 | 1.5 | Break |

[Table 4] Evaluation results of adhesion of Examples 11 to 16 and Comparative Examples 7 and 8

| | Adhesion(kgf) |
|---|---|
| Example 11 | 27.6 |
| Example 12 | 28.0 |
| Example 13 | 31.4 |
| Example 14 | 26.0 |
| Example 15 | 26.5 |
| Example 16 | 26.4 |
| Comparative Example 7 | 13.0 |
| Comparative Example 8 | 15.8 |

As shown in Tables 3 and 4, the tire inner liner films of the examples exhibit adhesion to a tire carcass layer of 20 kgf or more, as measured by ASTM D 4393, and exhibit very uniform adhesion distribution with a standard deviation of 1.3 to 2.8 (Examples 1 to 10). Thus, it was confirmed that the tire inner liner films of the examples may be very uniformly and strongly bonded to a tire carcass layer.

Further, the tire inner liner of Examples 1 to 10 exhibit adhesion after a dynamic fatigue test of 15 kgf or more, indicating that the adhesion property is not largely deteriorated by repeated deformations for a long time. Thus, it was confirmed that adhesion and fatigue resistance of the tire inner liner films of the examples are not largely deteriorated in a tire manufacturing process during which high temperature deformation/stretching is applied, or in an automobile running process during which repeated physical deformations are applied for a long time.

To the contrary, it was confirmed that the tire inner liner film of the comparative examples has relatively low adhesion measured by ASTM D 4393, compared to the tire inner liner films of the examples. Also, after the dynamic

fatigue test, the tire inner liner film of the comparative examples had adhesion of 10 kgf or less, or the adhesion specimen was broken, indicating that adhesion maintenance was significantly lowered by repeated physical deformations for a long time.

Further, although the tire inner liner films of Comparative Examples 2 to 4 have adhesion of 21.8 to 28.7 kgf as measured by ASTM D 4393, the standard deviation of the adhesion is large at 5.5 to 6.5, and thus it can be seen that they are not uniformly adhered to a tire carcass layer.

**Experimental Example 5. Air permeability test**

Air permeability of the base films obtained in Examples 1 and 2, Examples 6 and 7, Examples 11 to 16, and Comparative Examples 7 and 8 were measured by ASTM D 3895 using an Oxygen Permeation Analyzer (Model 8000, Illinois Instruments Co.) under a 25 °C and 60 RH% atmosphere.

**Experimental Example 6. Measurement of formability**

Tires were manufactured using the tire inner liner films obtained in Examples 1 and 2, Examples 6 and 7, Examples 11 to 16 and Comparative Examples 7 and 8, applying the 205R/65R16 standard. During the tire manufacturing process, manufacturability and appearance were evaluated after manufacturing a green tire, and then the final appearance of the tire was examined after vulcanization.

Herein, it was judged as "good" when there is no crushing of a green tire or a tire after vulcanization, and the standard deviation of the diameter is within 5 %. Further, it was judged as "shape faulty" when crushing of a green tire or a tire after vulcanization is generated and thus a tire is not properly manufactured, the inner liner in the tire is dissolved or torn and damaged, or the standard deviation of the diameter is greater than 5 %.

**Experimental Example 7. Measurement of internal pressure retention**

90 days IPR (Internal Pressure Retention) of the tire manufactured in Experimental Example 6 was measured and compared/evaluated according to the following Equation 2, under a 21 temperature and 101.3 kPa pressure by ASTM F 1112-06.

[Equation 2]

$$\text{Internal pressure retention (\%)} = \left\{ 1 - \frac{\text{Internal pressure of the tire at first evaluation} - \text{Internal pressure of the tire after standing for 90 days}}{\text{Internal pressure of the tire at first evaluation}} \right\} * 100$$

The measurement results of Experimental Examples 5 to 7 are summarized in the following Table 5.

[Table 5] Results of Experimental Examples 5 to 7

| | Air permeability ($cc/m^2*24\ hr*atm$) | Formability of green tire | Appearance evaluation of final tire | 90 days internal pressure retention (%) |
|---|---|---|---|---|
| Example 1 | 150 | good | good | 96.9 |
| Example 2 | 165 | good | good | 96.5 |
| Example 6 | 111 | good | good | 97.4 |
| Example 7 | 145 | good | good | 97.0 |
| Example 11 | 148 | good | good | 97.0 |
| Example 12 | 140 | good | good | 97.0 |

(continued)

| | Air permeability (cc/m$^2$*24 hr*atm) | Formability of green tire | Appearance evaluation of final tire | 90 days internal pressure retention (%) |
|---|---|---|---|---|
| Example 13 | 130 | good | good | 97.1 |
| Example 14 | 95 | good | good | 97.6 |
| Example 15 | 108 | good | good | 97.5 |
| Example 16 | 102 | good | good | 97.5 |
| Comparative Example 7 | 58 | Shape faulty | - | - |
| Comparative Example 8 | 457 | good | good | 92.5 |

As shown in the Table 5, the tire inner liner films of the examples exhibit air permeability of 200 cc/m$^2$*24 hr*atm or less, thus exhibiting an excellent gas barrier property with a thin thickness, and may be easily stretched or deformed with a small force in a tire manufacturing process, thus allowing excellent formability of a green tire or final tire.
To the contrary, although the tire inner liner film of Comparative Example 7 has low air permeability, a large force should be applied for stretching or deformation and it may not be sufficiently elongated, thus causing a shape faulty designation of a green tire or tearing of the inner liner film in a green tire, or rendering it impossible to manufacture a film.
Further, the tires manufactured using the tire inner liner films of the examples exhibit internal pressure retention (IPR) of 95 % or more, as measured for 90 days under 21 °C and 101.3 kPa according to ASTM F1112-06, thus preventing mileage lowering and overturning accidents induced by low internal pressure.
To the contrary, in the case of Comparative Example 7, internal pressure retention cannot be measured because a green tire cannot be molded, and in the case of Comparative Example 8, internal pressure retention of the tire is significantly low at 92.5%.
As explained, the tire inner liner film of the examples may be stretched or deformed according to the shape of a tire with a small force in a tire molding process, thus enabling easy molding in a tire manufacturing process. To the contrary, in the case of the comparative examples, sufficient stretching is not achieved even if expansion pressure is applied, thus causing a shape faulty designation of a green tire, tearing of an inner liner film, or widening of an inner liner film connection part, and even if it has sufficient formability, internal pressure retention of the tire is low due to high air permeability, thus lowering final properties.

**Experimental Example 8. Measurement of maximum load generated when a tire inner liner film and a base film are 100 % elongated, and measurement of deviation factor of General Formula 1**

Maximum load values exhibited when the base films and tire inner liner films obtained in the examples and comparative examples are 100 % elongated in a DM (Machine Direction) were measured.
The specific measuring method is as follows.

(1) Measuring apparatus: universal testing machine (Model 4204, Instron)
(2) Measurement conditions:

i) Head Speed 300 mm/min,
ii) Grip Distance 100 mm,
iii) Sample Width 10 mm,
iv) measured under 25 °C and 60 RH% atmosphere

(3) Each measured 5 times, and the mean value of the obtained results is calculated.

The obtained maximum load value is applied to the following General Formula 1, to calculate the maximum load deviation factor (Δm) of the tire inner liner film and base film at 100 % elongation at room temperature.

**[General Formula 1]**

$$\Delta M = \{(M_{ab} - M_b)/ M_b\} * 100$$

In the General Formula 1, $M_{ab}$ denotes maximum load exhibited when the tire inner liner film is 100 % elongated, and $M_b$ denotes maximum load exhibited when the base film is 100 % elongated.

The obtained results are shown in the following Table 6.

[Table 6] Results of Experimental Example 8

| | Maximum load of base film at 100 % elongation ($M_b$) [kgf] | Maximum load of tire inner liner film at 100 % elongation ($M_{ab}$) [kgf] | $\Delta M$ [%] |
|---|---|---|---|
| Example 1 | 2.05 | 2.45 | 19.51 |
| Example 2 | 1.37 | 1.60 | 16.79 |
| Example 6 | 2.05 | 2.50 | 21.95 |
| Example 7 | 2.05 | 2.53 | 23.41 |
| Example 11 | 2.05 | 2.61 | 27.32 |
| Example 12 | 1.88 | 2.15 | 14.36 |
| Example 13 | 1.84 | 1.98 | 7.61 |
| Example 14 | 2.28 | 2.56 | 12.28 |
| Example 15 | 1.88 | 2.06 | 9.57 |
| Example 16 | 1.88 | 2.18 | 15.96 |
| Comparative Example 7 | 3.8 | 5.4 | 42.11 |
| Comparative Example 8 | 0.86 | 0.94 | 9.30 |

As shown in the Table 6, it was confirmed that the maximum load exhibited when the tire inner liner film of the examples is 100 % elongated is 1.5 to 2.7 kgf, and when the tire inner liner film is 100 % elongated at room temperature, the maximum load deviation factor ($\Delta M$) of the tire inner liner film and base film is 7.61 % to 27.32 %. Thus, if the tire inner liner film according to the examples is applied, it may be stretched or deformed according the shape of a tire with a small force in a tire molding process, and since a small load is applied in the deformation or stretching step of the manufacturing process due to the property of the adhesive layer of the tire inner liner film, lowering of adhesion between the adhesive layer and carcass layer or between the adhesive layer and base film, or non-uniform adhesion may be prevented, and a fault rate may be minimized in the production of the final product.

To the contrary, in the case of the tire inner liner of Comparative Example 7, although it has an adhesive layer with the same thickness as Examples 1 and 2, the maximum load deviation factor ($\Delta M$) of the General Formula 1 at 100 % elongation is relatively large, and thus a large force should be applied in the deformation or stretching step of the tire manufacturing process, thus lowering formability of a tire or increasing the fault rate of the final product. In the case of the tire inner liner of Comparative Example 8, the maximum load at 100 % elongation is no more than 0.94 kgf, and thus it may be difficult to secure optimum properties or the base film may be excessively deformed or stretched in the tire manufacturing process.

## Symbols

1. Tread
2. Shoulder
3. Side Wall
4. CAP PLY

5. Belt
6. Body Ply
7. Inner Liner
8. APEX
9. BEAD

## Claims

**1.** A film for a tire inner liner, comprising:

a base film layer with a thickness of 30 to 300 $\mu$m, comprising a copolymer or mixture of 50 to 95 wt% of a polyamide-based resin and 5 to 50 wt% of a polyether-based resin; and
an adhesive layer comprising an adhesive containing 2 to 32 wt% of a condensate of resorcinol and formaldehyde and 68 to 98 wt% of latex.

**2.** The film for a tire inner liner according to claim 1, wherein the adhesive layer is formed on at least one side of the base film, and has a thickness of 0.1 to 20 $\mu$m.

**3.** The film for a tire inner liner according to claim 1, wherein a maximum load deviation factor ($\Delta$M) according to the following General Formula 1 of the tire inner liner film and the base film is 3 % to 30 % at 100 % elongation at 25 °C:

[General Formula 1]

$$\Delta M = \{(M_{ab} - M_b)/ M_b\} * 100$$

wherein, in General Formula 1,

$M_{ab}$ denotes a maximum load exhibited when the tire inner liner film is 100 % elongated at room temperature, and $M_b$ denotes a maximum load exhibited when the base film is 100 % elongated at room temperature.

**4.** The film for a tire inner liner according to claim 1, wherein a maximum load exhibited when the tire inner liner film is 100 % elongated at 25 °C is 1.0 to 4.0 Kgf.

**5.** The film for a tire inner liner according to claim 1, wherein the polyamide-based resin comprises at least one selected from the group consisting of nylon 6, nylon 66, nylon 46, nylon 11, nylon 12, nylon 610, nylon 612, a nylon 6/66 copolymer, a nylon 6/66/610 copolymer, nylon MXD6, nylon 6T, a nylon 6/6T copolymer, a nylon 66/PP copolymer, a nylon 66/PPS copolymer, a methoxy methylate of 6-nylon, a methoxy methylate of 6-610-nylon, and a methoxy methylate of 612-nylon.

**6.** The film for a tire inner liner according to claim 1, wherein the polyether-based resin comprises at least one selected from the group consisting of polyethylene glycol, polypropylene glycol, polytetramethylene glycol, polyoxyethylene diamine, polyoxypropylene diamine, polyoxytetramethylene diamine, and a copolymer thereof.

**7.** The film for a tire inner liner according to claim 1, wherein the base film has surface tension of 28 to 38 dyne/cm as measured by ASTM D2578.

**8.** The film for a tire inner liner according to claim 1, wherein the tire inner liner film has adhesion to a tire carcass layer of 15 to 40 kgf, as measured by ASTM D 4393.

**9.** The film for a tire inner liner according to claim 1, wherein the tire inner liner film has adhesion to a tire carcass layer of 10 to 40 kgf, as measured after a dynamic fatigue test according to ASTM D 430.

**10.** The film for a tire inner liner according to claim 1, wherein the tire inner liner film has air permeability of 200 cc/($m^2$ • 24 hr • atm) or less, as measured by ASTM D 3895.

**11.** The film for a tire inner liner according to claim 1, wherein the base film is an unstretched film.

**12.** The film for a tire inner liner according to claim 1, wherein the condensation mole ratio of resorcinol and formaldehyde is 1:0.3 to 1:3.0.

**13.** A method for manufacturing a film for a tire inner liner, comprising:

forming a copolymer or a mixture of 50 to 95 wt% of a polyamide-based resin and 5 to 50 wt% of a polyether-based resin;
melting and extruding the copolymer or mixture to form a base film with a thickness of 30 to 300 $\mu$m; and
forming an adhesive layer comprising 2 to 32 wt% of a condensate of resorcinol and formaldehyde and 68 to 98 wt% of latex on at least one side of the base film layer.

**14.** The method according to claim 13, wherein the step of forming the copolymer or mixture comprises polymerizing or mixing 50 to 95 wt% of the polyamide-based resin or a precursor thereof and 5 to 50 wt% of the polyether-based resin or a precursor thereof.

**15.** The method according to claim 13, wherein the step of melting and extruding the copolymer or mixture is conducted at 230 to 300 °C.

**16.** The method according to claim 13, wherein the adhesive layer has a thickness of 0.1 to 20 $\mu$m.

**Patentansprüche**

**1.** Film für eine Reifeninnenauskleidung, umfassend:

eine Grundfilmschicht mit einer Dicke von 30 bis 300 $\mu$m, umfassend ein Copolymer oder Mischung aus 50 bis 95 Gew.-% eines Polyamid-basierten Harzes und 5 bis 50 Gew.-% eines Polyether-basierten Harzes; und
eine Klebstoffschicht, umfassend einen Klebstoff, enthaltend 2 bis 32 Gew.-% eines Kondensats aus Resorcinol und Formaldehyd und 68 bis 98 Gew.-% Latex.

**2.** Film für eine Reifeninnenauskleidung nach Anspruch 1, wobei die Klebstoffschicht auf mindestens einer Seite des Grundfilms gebildet ist und eine Dicke von 0,1 bis 20 $\mu$m aufweist.

**3.** Film für eine Reifeninnenauskleidung nach Anspruch 1, wobei ein maximaler Lastabweichungsfaktor ($\Delta$M) gemäß der folgenden allgemeinen Formel 1 des Reifeninnenauskleidungsfilms und des Grundfilms 3 % bis 30 % bei 100 % Dehnung bei 25 °C beträgt:

[Allgemeine Formel 1]

$$\Delta M = \{(M_{ab} - M_b)/M_b\} * 100$$

worin in der allgemeinen Formel 1

$M_{ab}$ eine maximale Last bedeutet, die sich zeigt, wenn der Reifeninnenauskleidungsfilm 100 % bei Raumtemperatur gedehnt wird, und
$M_b$ eine maximale Last bedeutet, die sich zeigt, wenn der Grundfilm 100 % bei Raumtemperatur gedehnt wird.

**4.** Film für eine Reifeninnenauskleidung nach Anspruch 1, wobei eine maximale Last, die sich zeigt, wenn der Reifeninnenauskleidungsfilm 100 % bei 25 °C gedehnt wird, 1,0 bis 4,0 Kgf beträgt.

**5.** Film für eine Reifeninnenauskleidung nach Anspruch 1, wobei das Polyamid-basierte Harz mindestens eines umfasst, gewählt aus der Gruppe, bestehend aus Nylon 6, Nylon 66, Nylon 46, Nylon 11, Nylon 12, Nylon 610, Nylon 612, einem Nylon 6/66-Copolymer, einem Nylon 6/66/610-Copolymer, Nylon MXD6, Nylon 6T, einem Nylon 6/6T-Copolymer, einem Nylon 66/PP-Copolymer, einem Nylon 66/PPS-Copolymer, einem Methoxymethylat von 6-Nylon, einem Methoxymethylat von 6-610-Nylon und einem Methoxymethylat von 612-Nylon.

**6.** Film für eine Reifeninnenauskleidung nach Anspruch 1, wobei das Polyether basierte Harz mindestens eines umfasst, gewählt aus der Gruppe, bestehend aus Polyelthylenglycol, Polypropylenglycol, Polytetramethylenglycol, Polyoxyethylendiamin, Polyoxypropylendiamin, Polyoxytetramethylendiamin und einem Copolymer hievon.

**7.** Film für eine Reifeninnenauskleidung nach Anspruch 1, wobei der Grundfilm eine Oberflächenspannung von 28 bis 38 dyne/cm aufweist, gemessen durch ASTM D2578.

**8.** Film für eine Reifeninnenauskleidung nach Anspruch 1, wobei der Reifeninnenauskleidungsfilm eine Haftung gegenüber einer Reifenkarkassenschicht von 15 bis 40 kgf aufweist, gemessen durch ASTM D4393.

**9.** Film für eine Reifeninnenauskleidung nach Anspruch 1, wobei der Reifeninnenauskleidungsfilm eine Haftung gegenüber einer Reifenkarkassenschicht von 10 bis 40 kfg aufweist, gemessen nach einem dynamischen Ermüdungstest gemäß ASTM D 430.

**10.** Film für eine Reifeninnenauskleidung nach Anspruch 1, wobei der Reifeninnenauskleidungsfilm eine Luftpermeabilität von 200 $cm^3/(m^2 \cdot 24\ hr \cdot atm)$ oder weniger aufweist, gemessen durch ASTM D 3895.

**11.** Film für eine Reifeninnenauskleidung nach Anspruch 1, wobei der Grundfilm ein ungereckter Film ist.

**12.** Film für eine Reifeninnenauskleidung nach Anspruch 1, wobei das Kondensations-Molverhältnis von Resorcinol und Formaldehyd 1:0,3 bis 1:3,0 beträgt.

**13.** Verfahren zur Herstellung eines Films für eine Reifeninnenauskleidung, umfassend:

Bilden eines Copolymers oder einer Mischung aus 50 bis 95 Gew.-% eines Polyamid- basierten Harzes und 5 bis 50 Gew-% eines Polyether-basierten Harzes;
Schmelzen und Extrudieren des Copolymers oder der Mischung zur Bildung eines Grundfilms mit einer Dicke von 30 bis 300 μm; und
Bilden einer Klebstoffschicht, umfassend 2 bis 32 Gew.-% eines Kondensats aus Resorcinol und Formaldehyd und 68 bis 98 Gew.-% Latex, auf mindestens einer Seite der Grundfilmschicht.

**14.** Verfahren nach Anspruch 13, wobei der Schritt des Bildens des Copolymers oder der Mischung umfasst Polymerisieren oder Mischen von 50 bis 95 Gew.-% des Polyamid-basierten Harzes oder eines Vorläufers hiervon und 5 bis 50 Gew.-% des Polyether-basierten Harzes oder eines Vorläufers hiervon.

**15.** Verfahren nach Anspruch 13, wobei der Schritt des Schmelzens und Extrudierens des Copolymers oder der Mischung bei 230 bis 300 °C durchgeführt wird.

**16.** Verfahren nach Anspruch 13, wobei die Klebstoffschicht eine Dicke von 0,1 bis 20 μm aufweist.

## Revendications

**1.** Un film pour un revêtement intérieur de pneu, comprenant:

une couche de film de base avec une épaisseur de 30 à 300 μm, comprenant un copolymère ou un mélange de 50 à 95% en poids d'une résine à base de polyamide et de 5 à 50% en poids d'une résine à base polyéther; et
une couche adhésive comprenant un adhésif contenant de 2 à 32% en poids d'un condensât de résorcinol et de formaldehyde et de 68 à 98% en poids de latex.

**2.** Le film pour un revêtement intérieur de pneu selon la revendication 1, dans lequel la couche adhésive est formée sur au moins un côté du film de base, et a une épaisseur de 0,1 à 20 μm.

**3.** Le film pour un revêtement intérieur de pneu selon la revendication 1, dans lequel un facteur de déviation de charge maximal (ΔM) selon la formule générale 1 suivante du film de revêtement intérieur de pneu et du film de base est de 3% à 30% à 100% d'allongement 25 °C:

[formule générale 1]

$$\Delta M = \{(M_{ab} - M_b)/M_b\} * 100$$

dans lequel, dans la formule générale 1,

$M_{ab}$ désigne une charge maximale présentée lorsque le film intérieur du pneu est allongé à 100% à température ambiante, et
$M_b$ désigne une charge maximale présentée lorsque le film de base est allongé à 100% à température ambiante.

**4.** Le film pour un revêtement intérieur de pneu selon la revendication 1, dans lequel une charge maximale présentée lorsque le film de revêtement intérieur de pneu est allongé à 100% à 25 °C est de 1,0 à 4,0 Kgf.

**5.** Le film pour un revêtement intérieur de pneu selon la revendication 1, dans lequel la résine à base de polyamide comprend au moins une résine choisie parmi le groupe constitué de nylon 6, nylon 66, nylon 46, nylon 11, nylon 12, nylon 610, nylon 612, un copolymère de nylon 6/66, un copolymère de nylon 6/66/610, un nylon MXD6, un nylon 6T, un copolymère de nylon 6/6T, un copolymère de nylon 66/PP, un copolymère de nylon 66/PPS, un méthoxy-méthylate de 6-nylon, un méthoxy-méthylate de 6-610-nylon et un méthoxy-méthylate de 612-nylon.

**6.** Le film pour un revêtement intérieur de pneu selon la revendication 1, dans lequel la résine à base de polyéther comprend au moins un composé choisi parmi le groupe constitué par le polyéthylèneglycol, le polypropylèneglycol, le polytétraméthylèneglycol, la polyoxyéthylènediamine, la polyoxypropylènediamine, la polyoxytétraméthylènediamine et un copolymère de ceux-ci.

**7.** Le film pour un revêtement intérieur de pneu selon la revendication 1, dans lequel le film de base a une tension de surface de 28 à 38 dyne/cm, telle que mesurée par la norme ASTM D2578.

**8.** Le film pour un revêtement intérieur de pneu selon la revendication 1, dans lequel le film pour un revêtement intérieur de pneu a une adhérence à une couche de carcasse de pneu de 15 à 40 kgf, telle que mesurée par la norme ASTM D 4393.

**9.** Le film pour un revêtement intérieur de pneu selon la revendication 1, dans lequel le film pour un revêtement intérieur de pneu a une adhérence à une couche de carcasse de pneu de 10 à 40 kgf, telle que mesurée après un test de fatigue dynamique selon la norme ASTM D 430.

**10.** Le film pour un revêtement intérieur de pneu selon la revendication 1, dans lequel le film pour un revêtement intérieur de pneu a une perméabilité à l'air de 200 cc / ($m^2 \cdot 24$ h · atm) ou moins, telle que mesurée selon la norme ASTM D 3895.

**11.** Le film pour un revêtement intérieur de pneu selon la revendication 1, dans lequel le film de base est un film non étiré.

**12.** Le film pour un revêtement intérieur de pneu selon la revendication 1, dans lequel le rapport molaire de condensation du résorcinol et du formaldéhyde est de 1:0,3 à 1:3,0.

**13.** Un procédé de fabrication d'un film pour un revêtement intérieur de pneu, comprenant:

la formation d'un copolymère ou d'un mélange de 50 à 95% en poids d'une résine à base de polyamide et de 5 à 50% en poids d'une résine à base de polyéther;
la fusion et l'extrusion du copolymère ou du mélange pour former un film de base d'une épaisseur de 30 à 300 $\mu$m; et
la formation d'une couche adhésive comprenant de 2 à 32% en poids d'un condensat de résorcinol et de formaldéhyde et de 68 à 98% en poids de latex sur au moins un côté de la couche de film de base.

**14.** Le procédé selon la revendication 13, dans lequel l'étape de formation du copolymère ou du mélange comprend la polymérisation ou le mélange de 50 à 95% en poids de la résine à base de polyamide ou d'un précurseur de celle-ci et de 5 à 50% en poids de la résine à base de polyéther ou d'un précurseur de celle-ci.

**15.** Le procédé selon la revendication 13, dans lequel l'étape de fusion et d'extrusion du copolymère ou du mélange

est conduite à une température de 230 à 300 °C.

16. Le procédé selon la revendication 13, dans lequel la couche adhésive a une épaisseur de 0,1 à 20 μm.

Figure 1

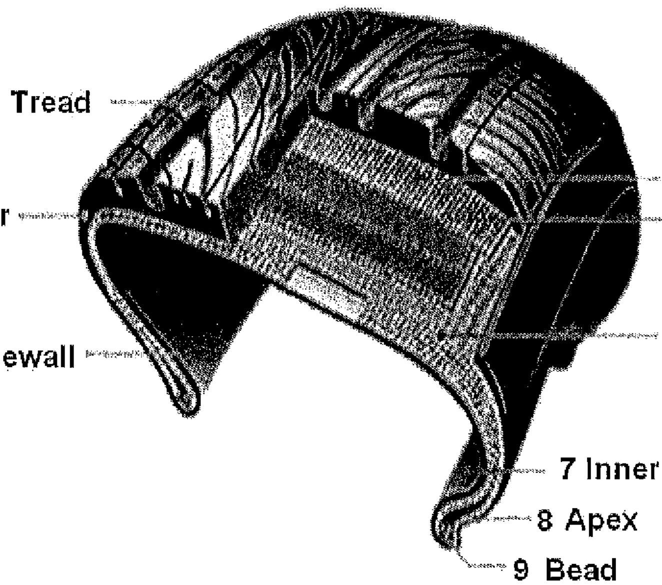
1 Tread
2 Shoulder
3 Sidewall
4 Cap ply
5 Belt
6 Body ply
7 Inner liner
8 Apex
9 Bead

Figure 2

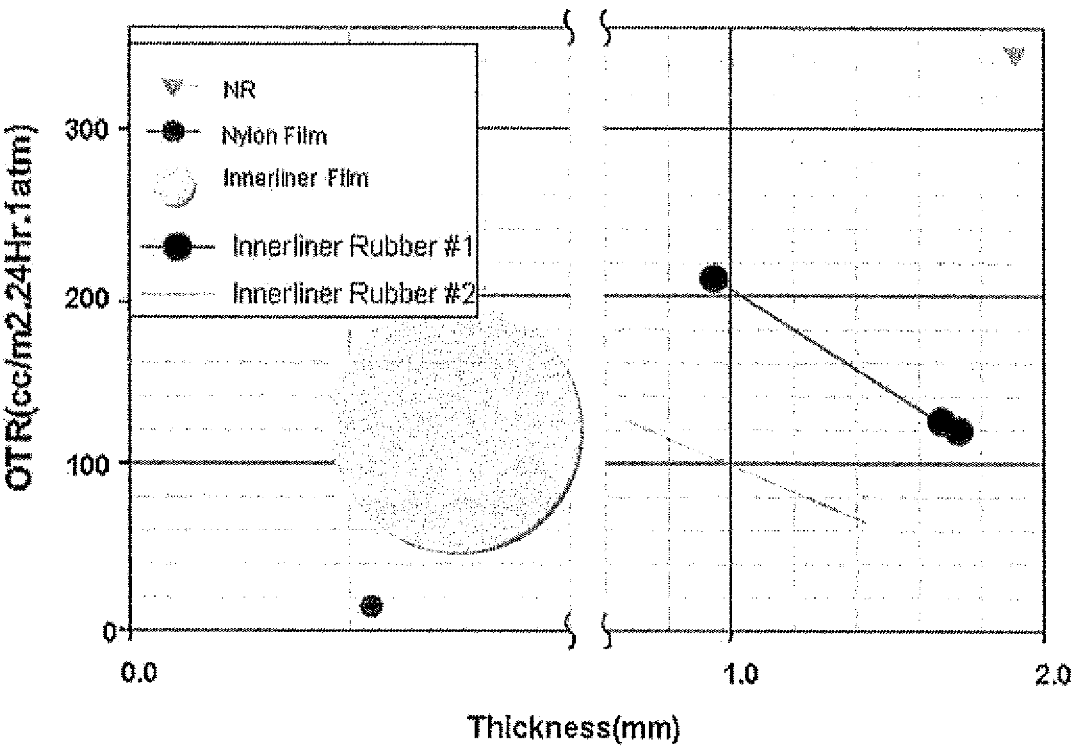
NR
Nylon Film
Innerliner Film
Innerliner Rubber #1
Innerliner Rubber #2
300
200
100
0
0.0
1.0
2.0
OTR(cc/m2.24Hr.1atm)
Thickness(mm)